# EUROPEAN PATENT APPLICATION

(11) **EP 3 184 861 A2**
(43) Date of publication of application: **28.06.2017**
(21) Application number: 16203850.9
(22) Date of filing: 13.12.2016
(51) Int. Cl.: F16H 61/02

(54) **AUTO-EFFICIENCY MODE FOR POWER SHIFT TRANSMISSIONS**

(30) Priority: 18.12.2015 US 201514974884
(71) Applicant: CNH Industrial Italia S.p.A., 10135 Torino (IT)
(72) Inventor: OMRAN, Ashraf, Clarendon Hills, IL 60514 (US); BULGRIEN, Garth H., Ephrata, Pennsylvania 17522 (US); HARTMAN, Brian, Valparaiso, IN 46383 (US); KUROS, Mr. Pawel, Wood Dale, IL Illinois 60191 (US)
(74) Representative: CNH Industrial IP Department

(57) **Abstract**

A system includes an agricultural vehicle, including an engine; a transmission with multiple gear ratios driven by the engine, and a controller. The controller is configured to receive a requested wheel speed input by an operator, calculate a desired engine speed, command a gear upshift if a current engine speed is more than the desired engine speed and if upshifting will locate the current engine speed closer to the desired engine speed, and command a gear downshift if the current engine speed is less than the desired engine speed and if downshifting will locate the current engine speed closer to the desired engine speed.

## Description

### BACKGROUND

The present application relates generally to transmissions, and more particularly, to an auto efficiency mode for power shift transmissions.

Various types of agricultural vehicles (e.g., tractors, floaters, sprayers, or the like) may be used to plow a field, till land, plant seeds, or accomplish other similar agricultural operations. Typical agricultural vehicles include an engine configured to power the vehicle, and a transmission configured to transfer engine power to rotating wheels at a desired gear ratio.

Some agricultural vehicles include controllers that control the engine and/or transmission based on the assumption that the lowest possible engine speed is best for the engine's fuel economy. That is, some controllers do not calculate whether a higher or lower gear of the transmission may result in better overall fuel economy.

### BRIEF DESCRIPTION

In one embodiment, a system includes an agricultural vehicle, including an engine, a transmission with multiple gear ratios driven by the engine, and a controller. The controller is configured to receive a requested wheel speed input by an operator, calculate a desired engine speed, command a gear upshift if a current engine speed is more than the desired engine speed and if upshifting will locate the current engine speed closer to the desired engine speed, and command a gear downshift if the current engine speed is less than the desired engine speed and if downshifting will locate the current engine speed closer to the desired engine speed.

In one embodiment, a tangible, non-transitory computer-readable media storing computer instructions thereon, the computer instructions, when executed by a processor: receive a requested wheel speed input by an operator, calculate a desired engine speed, command a gear upshift if a current engine speed is more than the desired engine speed and if upshifting will locate the current engine speed closer to the desired engine speed, and command a gear downshift if the current engine speed is less than the desired engine speed and if downshifting will locate the current engine speed closer to the desired engine speed.

In a third embodiment, a method of operating an agricultural vehicle, includes receiving a requested wheel speed input by an operator at a processor, commanding a gear upshift if a current engine speed is more than a desired engine speed and if upshifting will locate the current engine speed closer to the desired engine speed, and commanding a gear downshift if the current engine speed is less than the desired engine speed and if downshifting will locate the current engine speed closer to the desired engine speed.

### DRAWINGS

These and other features, aspects, and advantages of the present invention will become better understood when the following detailed description is read with reference to the accompanying drawings in which like characters represent like parts throughout the drawings, wherein:
FIG. 1 is a schematic side view of an embodiment of an agricultural vehicle;
FIG. 2 depicts a block diagram of an embodiment of a control system that may be utilized to control the agricultural vehicle of FIG. 1;
FIG. 3 depicts a BSFC map that may be used by the control system of FIG. 2 to determine a minimum brake specific fuel consumption;
FIG. 4 depicts a power-RPM curve showing an engine power versus an engine RPM that may be generated based on the BSFC map of FIG. 3; and
FIG. 5 is a block diagram of an embodiment of a method of operating the control system of FIG. 2 to select a gear to adjust an engine speed of the agricultural vehicle.

### DETAILED DESCRIPTION

The embodiments disclosed herein relate to a system including an agricultural vehicle controller configured to achieve and maintain a requested wheel speed input by a driver. The controller uses an auto-efficiency mode (AEM) controller to carry out the techniques described herein. The controller may reduce occurrences of engine stalling by managing power consumption. The controller may be configured to substantially match the engine speed to a requested wheel speed, while using a power-engine speed curve. The controller may adjust an engine speed and a transmission gear to maintain the requested wheel speed and to minimize fuel consumption at a given power. The controller may also receive signals from other components (e.g., a brake controller, and so forth).

In certain embodiments, the controller system receives a driver input (e.g., via a speed control lever. The controller system may calculate a corresponding transmission output and a corresponding acceptable engine speed range. The controller system may determine if the desired engine speed is more than a maximum engine speed, and shifts up and throttles back (e.g., reduces engine speed) until the engine speed is less than the maximum engine speed. If the desired engine speed is less than a minimum engine speed, the controller system shifts down and throttles up (e.g., increases engine speed) until the desired engine speed is more than the minimum engine speed. The controller system may control an engine speed governor to adjust the current engine speed to reach the desired engine speed by adjusting a quantity of fuel injected.

The controller system may use a brake specific fuel consumption (BSFC) subsystem to select a desired engine speed based on an optimal BSFC curve for the engine. In some embodiments, no gear will enable the engine speed to fall on the optimal BSFC curve. In these instances, the controller system may use the techniques described herein to locate the engine speed as close as possible to the desired engine speed on the optimal BSFC curve.

The controller system first estimates a torque value (e.g., after upshifting using gear ratios). The estimated torque value is then multiplied by the actual engine speed to calculate a power requirement (e.g., a power that enables the requested wheel speed). The power requirement may be determined after the requested wheel speed is achieved (e.g., at steady state). The controller system uses a BSFC subsystem to determine an optimal or desired engine speed (e.g., a desired engine speed or the engine speed at which the value of the BSFC is lowest for a given engine power). The BSFC subsystem may use a BSFC look up table to determine the desired engine speed. The BSFC curve and/or look up table may be engine-specific (e.g., based on engine characteristics) and may be pre-determined and/or stored in a memory within or accessible to the controller system.

The controller system may command an upshift if a current engine speed is more than the desired engine speed and if upshifting will result in moving closer to the desired engine speed. The controller system may command a downshift if the current engine speed is less than the desired engine speed and if downshifting will result in moving closer to the desired engine speed. In certain embodiments, the controller system may command an upshift if the current engine speed is greater than the desired engine speed, if upshifting will result in moving closer to the desired engine speed, and/or if a maximum gear index has not been reached (e.g., a higher gear is available). As described above, the controller system may control the engine speed by controlling an engine speed governor. The engine speed governor adjusts the current engine speed to reach the desired engine speed by adjusting a quantity of fuel injected.

In certain embodiments, the controller system may command a downshift if the current engine speed is less than the desired engine speed, if downshifting will result in moving closer to the desired engine speed, and/or if a minimum gear index has not been reached (e.g., a lower gear is available).

The controller system may include various protection subsystems. For example, the controller system may include a maximum gear index to avoid engine stalling when the engine is under high load conditions (e.g., upshift protection). The controller system may also include a mechanism to downshift if the power (e.g., power requirement) exceeds the maximum available engine power to reduce occurrences of stalling (e.g., downshift protection). The controller system may include a power protection subsystem. For example, if the current wheel speed is lower than the requested wheel speed, the power protection subsystem may estimate a hypothetical power value if an upshift occurs, and if the hypothetical power value is higher than the maximum available engine power, the upshift does not occur. As used herein, the maximum available engine power, the maximum engine speed, and the minimum engine speed are engine characteristics and/or are known or pre-determined features of the engine.

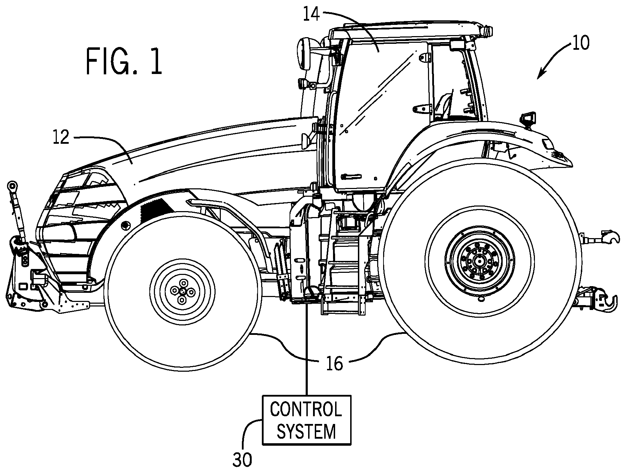

With the foregoing in mind, FIG. 1 is a perspective view of an embodiment of an off-road vehicle 10 having an AEM controller. In the illustrated embodiment, the vehicle 10 is an agricultural tractor. However, any suitable off-road vehicle, including combines, trucks, and so forth, may utilize aspects of the disclosed embodiments. In the illustrated embodiment, the vehicle 10 includes a body 12 and a cabin 14 in which an operator may sit to operate the vehicle 10. The body 12 may house an internal combustion engine, a transmission, and a power train for driving one or more wheels 16. It should be understood that in some vehicles such wheels 16 may be replaced with tracks or other drive systems. As discussed in more detail below, the agricultural vehicle 10 may include a control system 30. As discussed in detail below, the control system 30 may be configured to shift gears and to adjust the engine speed to a desired engine speed, based in part on a brake specific fuel consumption.

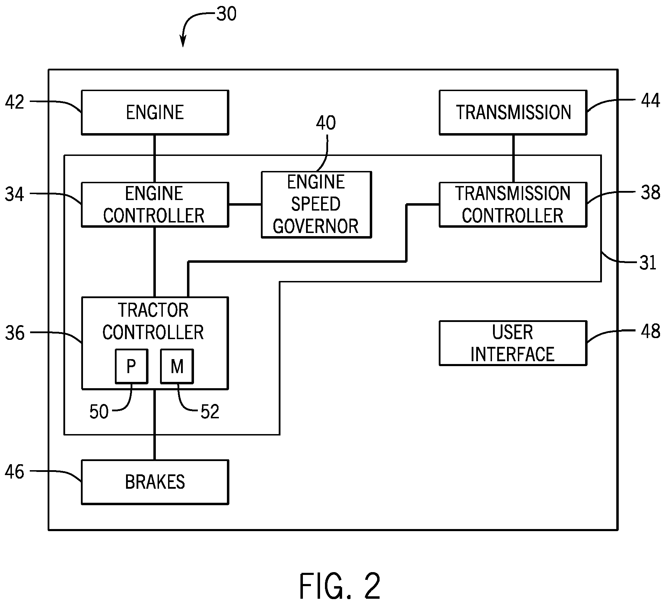

FIG. 2 depicts a block diagram of an embodiment of the control system 30 that may be utilized to control the agricultural vehicle 10 of FIG. 1. The control system 30 includes a controller system 31 which may include an engine controller 34, a tractor controller 36, and a transmission controller 38. As will be appreciated, the controllers 34, 36, and 38may each include one or more processors, memory devices, and/or storage devices. Furthermore, the controllers 34, 36, and 38 are communicatively coupled to one another. In this configuration, the controllers 34, 36, and 38function cooperatively to control operation of an engine 42 and a transmission 44. The engine controller 34 is configured to control the engine 42, and the transmission controller 38 is configured to control the transmission 44. The engine 42 may be any suitable device configured to transfer torque to the transmission system 44. The transmission controller 38 may instruct the transmission to shift gears (e.g., upshift or downshift) as discussed below. In certain embodiments, the transmission 44 is a step ratio transmission that includes multiple discrete gears (e.g., as compared to a continuously variable transmission). Each gear of the transmission has an associated gear index and establishes a different gear ratio when selected. Increasing the gear index reduces the gear ratio, and decreasing the gear index increases the gear ratio. As shown, the control system 30 includes a user interface 48.

In the illustrated embodiment, the engine controller 34 may receive signals from sensors configured to output data indicative of a condition (e.g., speed) of the engine 52. In certain embodiments, the engine controller 34 may control the engine 42 such that the engine maintains a constant engine speed. The agricultural vehicle controller 36 is communicatively coupled to the engine controller 34 and the transmission controller 38. In the illustrated embodiment, the agricultural vehicle controller 36 includes a memory 50 and a processor 52. The memory 50 may be any type of non-transitory machine readable medium for storing data and executable instructions, such as random-access memory, read-only memory, rewritable flash memory, hard drives, optical discs, and the like. The processor 52 may execute instructions stored on the memory 50. For example, the memory 50 may contain machine readable code, such as instructions, that may be executed by the processor 52. In some embodiments, the memory 50 and the processor 52 of the agricultural vehicle controller 36 may instruct the engine controller 34 and/or the transmission controller 38 to automatically shift (e.g., processor/memory controlled) between gears of the transmission 44 to improve brake specific fuel consumption, for example.

In the illustrated embodiment, a requested wheel speed may be set by a user (e.g., via a speed control lever, the user interface 48, or other input device). The user interface 48 may enable an operator to select an engine speed and/or adjust various parameters associated with the engine/transmission system operation. An AEM mode (e.g., executed by the controller system 31) may be configured to determine a corresponding transmission output and a corresponding desired engine speed. For example, the corresponding transmission output may be determined based on the requested wheel speed, gear ratio, and tire radius. The corresponding desired engine speed may be determined based on the corresponding transmission output, gear index, and current gear ratio.

The controller system 31 first estimates a torque value (e.g., after upshifting using gear ratios). The estimated torque value is then multiplied by the actual engine speed to calculate a power requirement (e.g., a power that enables the requested wheel speed). The power requirement may be determined after the requested wheel speed is achieved (e.g., at steady state). The controller system 31 uses a BSFC subsystem to determine an optimal engine speed (e.g., a desired engine speed or the engine speed at which the value of the BSFC is lowest for a given power requirement). The BSFC subsystem may use a BSFC look up table to determine the desired engine speed. The BSFC curve and/or look up table may be engine-specific (e.g., based on engine characteristics) and may be pre-determined and/or stored in a memory within or accessible to the controller system 31.

The controller system 31 may control the engine speed by controlling an engine speed governor 40. The engine speed governor 40 may adjust the current engine speed to reach the desired wheel speed, including adjusting the engine speed after an upshift or downshift. For example, the engine speed governor 40 may adjust the current engine speed by adjusting a quantity of fuel injected to achieve and/or maintain a wheel speed close to the desired wheel speed.

The controller system 31 may command an upshift if a current engine speed is more than the desired engine speed and if upshifting will result in moving closer to the desired engine speed. The controller system 31 may command a downshift if the current engine speed is less than the desired engine speed and if downshifting will result in moving closer to the desired engine speed. In certain embodiments, the controller system 31 may command an upshift if the current engine speed is greater than the desired engine speed, if upshifting will result in moving closer to the desired engine speed, and/or if a maximum gear index has not been reached (e.g., a higher gear is available).

In certain embodiments, the controller system 31 may command a downshift if the current engine speed is less than the desired engine speed, if downshifting will result in moving closer to the desired engine speed, and/or if a minimum gear index has not been reached (e.g., a lower gear is available).

The controller system 31 may include various protection subsystems. For example, the controller system 31 may include a maximum gear index to avoid engine stalling when the engine is under high load conditions (e.g., upshift protection). The controller system 31 may also include a mechanism to downshift if the power (e.g., power requirement) approaches the maximum available engine power at the current engine speed to reduce occurrences of stalling (e.g., downshift protection). The controller system 31 may include a power protection subsystem. For example, if the current wheel speed is lower than the requested wheel speed, the power protection subsystem may estimate a hypothetical power value if an upshift occurs, and if the hypothetical power value is higher than the maximum available engine power, the upshift does not occur. As used herein, the maximum available engine power, the maximum engine speed, and the minimum engine speed are engine characteristics and/or are known or pre-determined features of the engine.

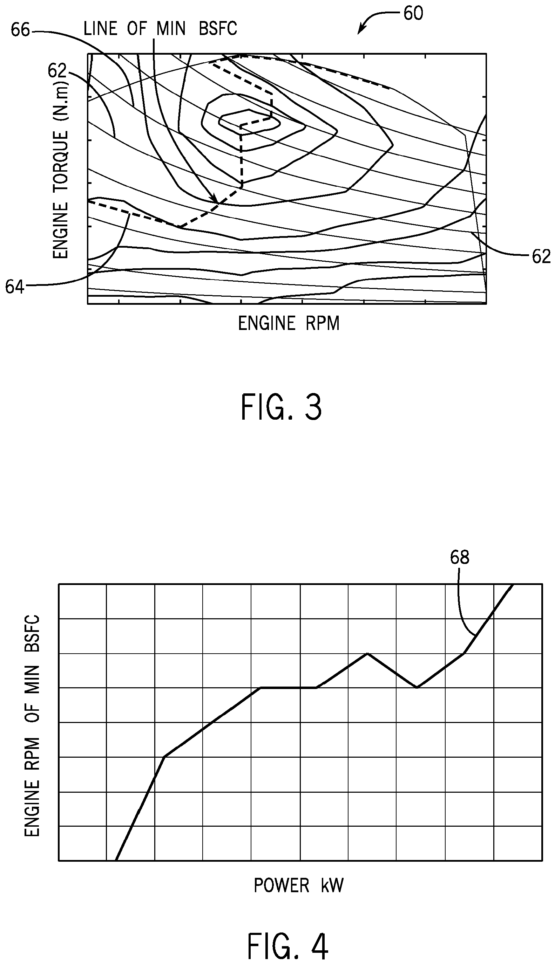

FIG. 3 depicts a BSFC map 60 that may be used by the control system 30 to determine a minimum brake specific fuel consumption (BSFC). A power-engine speed curve may be derived from the BSFC map, as described further with respect to the discussion of FIG. 4. As shown, the engine speed is tracked along the x-axis, and the engine torque (Newton-meter) is tracked along the y-axis. The BSFC may be indicative of a fuel consumption rate with respect to power production and may be indicative of fuel efficiency. The BSFC map 60 may include a line that represents or is indicative of minimum brake specific fuel consumption (depicted by line 64), across engine power levels. The BSFC map 60 may include lines of constant BSFC (e.g., line 66) and lines of constant power (e.g., line 62). The line of BSFC 64 is based on the minimum BSFC value for each constant power curve 62. The minimum brake specific fuel consumption 64 can be used to generate a power-speed curve, as described further with respect to FIG. 4. For each constant power level, there is an engine operating condition (e.g., speed and torque) with a minimum BSFC value. If there is no change in system load, the control may move through the constant power levels by shifting to a higher gear and reducing engine speed or shifting to a lower gear and increasing engine speed. As described above, the controller system 31 aims to locate the engine operating conditions as close as possible to the minimum BSFC value for a given operating power level.

FIG. 4 depicts a power-engine speed curve 68 showing the engine power versus the engine speed. The minimum brake specific fuel consumption 64 can be used to generate a power-speed curve. Based on a power (e.g., a power that causes or enables the agricultural vehicle 10 to move at the requested wheel speed), the engine speed can be selected (e.g., by the controller system 31) based on power-engine speed curve 68. For example, the controller system 31 may determine a desired engine speed at which the BSFC or fuel consumption is the lowest for a given power. The power-engine curve may be adjusted for other considerations in addition to the BSFC values. For example, in some embodiments, the adjustments may be made such that the engine is not run at the maximum torque curve (e.g., to reduce incidents of stalling).

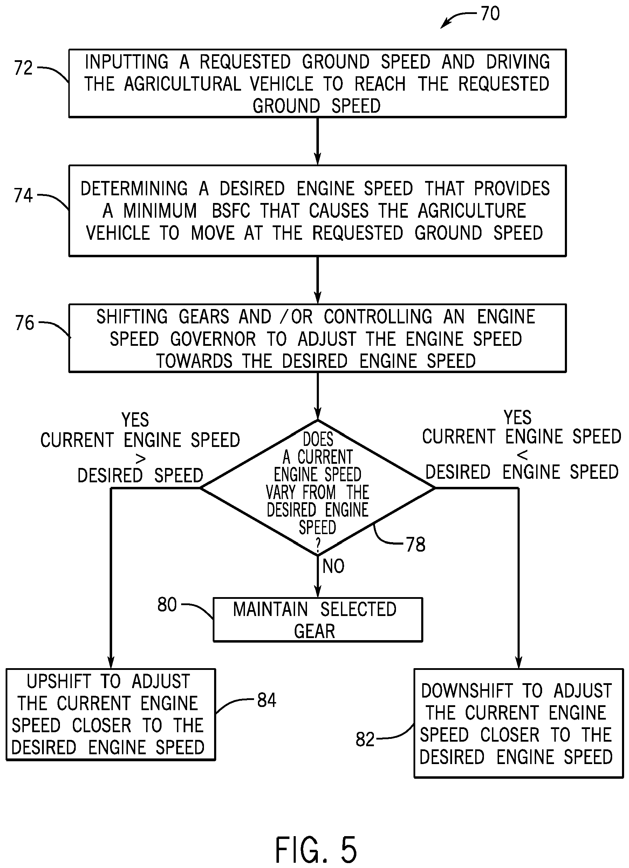

FIG. 5 is a block diagram of an embodiment of a method 70 of operating the control system 30 to select a gear to adjust the engine speed of the agricultural vehicle 10. The control system 30 first receives a requested wheel speed and drives the agricultural vehicle 10 to reach the desired wheel speed (block 72). A BSFC map, a power-engine speed curve, and/or a lookup table generated based on the power-engine speed curve may be accessed by the control system 30 (e.g., from a memory device by a processor of a controller). The control system 30 then determines a desired engine speed that provides a minimum BSFC at a power (e.g., a power that enables the agricultural vehicle 10 to move at the requested wheel speed) (block 74). The control system 30 may then shift gears and/or control the engine speed by an engine control governor to adjust the current engine speed to reach the desired engine speed by adjusting a quantity of fuel injected (block 76). The control system 30 may upshift, downshift, or maintain the gear. The control system 30 next determines if the current engine speed varies from the desired engine speed (block 78). If the current engine speed does not vary from the desired engine speed, the control system 30 maintains the selected gear of the gear index (block 80). If the current engine speed varies from the desired engine speed and the current engine speed is less than the desired engine speed, the control system 30 instructs the transmission to downshift to locate the engine speed closer to the desired engine speed (block 82). If the engine speed varies from the desired engine speed and the current engine speed is greater than the desired engine speed, the control system 30 instructs the transmission to downshift to locate the engine speed closer to the desired engine speed (block 84).

As noted above, in some embodiments, the control system 30 may be configured to calculate a corresponding transmission output and a corresponding desired engine speed based at least in part on the requested wheel speed. In certain embodiments, the controller system 31 may command an upshift if the current engine speed is greater than the desired engine speed, if upshifting will result in moving closer to the desired engine speed, and/or if a maximum gear index has not been reached (e.g., a higher gear is available).

In certain embodiments, the controller system 31 may command a downshift if the current engine speed is less than the desired engine speed, if downshifting will result in moving closer to the desired engine speed, and/or if a minimum gear index has not been reached (e.g., a lower gear is available).

It should be understood that the steps (e.g., the steps of method 70) disclosed herein by be performed by any suitable components of the control system 30, including the controllers 34, 36, 38, and their respective processors and memory components, for example.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. An agricultural vehicle (10), comprising:
- an engine (42);
- a transmission (44) with multiple gear ratios driven by the engine (42); and
- a controller (31) configured to:
- receive a requested wheel speed input by an operator;
- calculate a desired engine speed;
- command a gear upshift if a current engine speed is more than the desired engine speed and if upshifting will locate the current engine speed closer to the desired engine speed; and
- command a gear downshift if the current engine speed is less than the desired engine speed and if downshifting will locate the current engine speed closer to the desired engine speed.

2. The vehicle (10) of claim 1, wherein the requested wheel speed comprises a minimum and a maximum requested wheel speed.

3. The vehicle (10) of claim 1, wherein the controller (31) is configured to access a lookup table relating power to engine speed to determine the desired engine speed.

4. The vehicle (10) of claim 1, wherein the controller (31) is configured to determine engine speed based on a map of minimum fuel consumption (60) at multiple torques and engine speeds.

5. The vehicle (10) of claim 3, wherein the lookup table is stored in a memory of the controller (31).

6. The vehicle (10) of claim 1, wherein the controller (31) is configured to command the downshift if the power exceeds a maximum available power for an engine (42) of the agricultural vehicle (10).

7. The vehicle (10) of claim 1, wherein the controller (31) is configured to control an engine speed governor (40) to adjust a quantity of fuel injected to locate the current wheel speed closer to the desired wheel speed.

8. The vehicle (10) of claim 1, wherein a pre-determined time delay is utilized after each upshift and downshift.

9. The vehicle (10) of claim 1, wherein the controller (31) is configured to calculate a desired engine speed based at least in part on a gear ratio and to command an upshift when an upshifted engine speed is greater than the desired engine speed.

10. The vehicle (10) of claim 1, wherein the controller (31) is configured to calculate a desired engine speed based at least in part on a gear ratio and to command a downshift when a downshifted engine speed is less than the desired engine speed.

11. A method (70) of operating an agricultural vehicle (10), comprising:
- receiving a requested wheel speed input by an operator at a processor (72);
- commanding a gear upshift if a current engine speed is more than a desired engine speed and if upshifting will locate the current engine speed closer to the desired engine speed (84); and
- commanding a gear downshift if the current engine speed is less than the desired engine speed and if downshifting will locate the current engine speed closer to the desired engine speed (82).

12. The method (70) of claim 11, wherein determining the desired engine comprises accessing a lookup table relating power to engine speed to determine the desired engine speed.

13. The method of claim 11, wherein determining the desired engine speed comprises utilizing a map of minimum fuel consumption at multiple torques and engine speeds.
